# EUROPÄISCHE PATENTSCHRIFT

(11) **EP 1 529 001 B1**
(45) Veröffentlichungstag und Bekanntmachung des Hinweises auf die Patenterteilung: **07.06.2006**
(21) Anmeldenummer: 03793684.6
(22) Anmeldetag: 05.08.2003
(51) Int. Cl.: B62D 33/06

(54) **FAHRERHAUS MIT LIEGE**
DRIVER'S CAB COMPRISING A BUNK
CABINE DE CONDUCTEUR AVEC COUCHETTE

(30) Priorität: 17.08.2002 DE 10237783
(43) Veröffentlichungstag der Anmeldung: 11.05.2005
(73) Patentinhaber: DaimlerChrysler AG, 70567 Stuttgart (DE)
(72) Erfinder: HÖRNLE, Frank, 71254 Ditzingen (DE); WEIDLER, Dietmar, 27432 Bremervörde (DE)
(74) Vertreter: Wagner, Jürgen
(86) Internationale Anmeldenummer: PCT/EP2003/008625
(87) Internationale Veröffentlichungsnummer: WO 2004/022419

(56) Entgegenhaltungen:
- FR-A- 1 393 457
- US-A- 3 772 716
- US-A- 4 141 093
- US-B1- 6 428 044

## Beschreibung

Die Erfindung betrifft ein Fahrerhaus für ein Nutzfahrzeug nach den Merkmalen des Oberbegriffs des Anspruchs 1.

US4141093 zeigt eine solche Liege für ein Nutzfahrzeugfahrerhaus. Die EP 0 168 708 B1 zeigt eine Liege für ein Nutzfahrzeugfahrerhaus. Diese Liege weist eine Matratze auf, die auf einer wabenähnlichen Trägerstruktur aufliegt. Die Trägerstruktur ist einerseits an der hinteren Innenwand des Fahrerhauses schwenkbar gelagert und andererseits über Gurte an dem Dach des Fahrerhauses aufgehängt. Die Trägerstruktur weist am Kopfende und am Fußende je eine über die struktur hinausragende Verlängerung mit einem Haken auf zur Befestigung des Gurtes auf. Diese Verlängerungen mit dem massiven Haken benötigen zusätzlichen Bauraum am Kopfende und am Fußende der Liege und stellen bei einem Unfall ein mögliches Verletzungsrisiko dar.

In der deutschen Offenlegungsschrift DE 16 30 788 ist eine Schlafliege für ein Nutzfahrzeug gezeigt. Diese Schlafliege ist über vier Federstangen an der Decke des Nutzfahrzeugs aufgehängt. Diese Art der Aufhängung benötigt relativ viel Bauraum und birgt im Falle eines Unfalls aufgrund der massiven Federstangen ein nicht unerhebliches Verletzungsrisiko.

Es ist Aufgabe der Erfindung, ein Fahrerhaus mit einer Liege zu schaffen, das konstruktiv einfach und möglichst kompakt aufgebaut ist. Vorzugsweise soll die Liege bei Nichtgebrauch verstaubar sein und bei Gebrauch eine komfortable Liegemöglichkeit bieten. Zudem soll das von der Liege ausgehende Verletzungspotenzial so gering wie möglich sein.

Diese Aufgabe wird erfindungsgemäß durch ein Fahrerhaus nach den Merkmalen des Anspruchs 1 gelöst.

Die Liege weist zwei parallel verlaufende Holme auf, auf denen eine Matratze aufliegt. Um die Liege bei Nichtgebrauch verstauen zu können, ist ein Holm schwenkbar mit einer Wand, vorzugsweise Rückwand des Fahrerhauses verbunden. Dadurch kann die Liege bei Nichtgebrauch weggeschwenkt werden. Der andere Holm ist mit einem Gurt verbunden, der die Liege an dem Dach des Fahrerhauses aufhängt. Dieser Holm weist eine Gurtführung auf, die den Gurt an dem Holm anliegend einmal um den Holm herum führt. Dadurch wird eine sichere Anlage des Gurtes an dem Holm und damit eine gute Halterung der Liege erzielt. Durch die Anlage des Gurtes an dem Holm stehen keine verletzungsgefährliche Teile über die Liegefläche hinaus. Ein Abstandshalter führt den Gurt mit Abstand an der Matratze vorbei, so dass die Matratze nicht von dem Gurt zusammengedrückt wird. Somit wird der Gurt durch die Gurtführung möglichst eng an der Liege geführt und gleichzeitig eine möglichst große und komfortable Liegefläche geschaffen.

In einer Ausführung ist vorgesehen, dass die Holme in Längsrichtung der Liege verlaufen. Sie sind vorzugsweise durch Querstreben miteinander verbunden, so dass die Liege eine Art Lattenrost als Auflage für die Matratze aufweist. Der Abstand der Holme legt die Breite der Liege fest. Die Matratze erstreckt sich insbesondere über die gesamte Breite der Liege. Sie polstert die Holme ab, indem sie die Holme überdeckt. Dadurch wird eine möglichst gute Ausnutzung des Bauraumes, vorzugsweise der Breite der Liege erzielt.

Es ist vorgesehen, dass der von der Wand des Fahrerhauses abgewandte Holm mehr als einen Gurt, vorzugsweise zwei Gurte aufweist, um eine stabile Aufhängung der Liege zu gewährleisten. Die an einer Längsseite der Liege nebeneinander angeordneten Gurte können zudem als Absturzsicherung für den Liegenden ausgebildet sein, so dass dieser gegen Herausfallen aus der Liege gesichert ist.

In einer Ausführung ist vorgesehen, dass der Abstandshalter mit der Gurtführung verbunden ist, so dass der Abstandshalter mit der Gurtführung eine kompakte Einheit bildet. Vorzugsweise ist der Abstandshalter mit der Gurtführung einstückig verbunden ausgebildet. Für einen ästhetisch angenehmen Eindruck bei zugleich geringem Verletzungsrisiko ist vorgesehen, dass der Abstandshalter und/oder die Gurtführung eine abgerundete Außenkontur aufweist.

Vorteilhafterweise ist die Gurtführung und/oder der Abstandshalter aus Kunststoff, vorzugsweise als Spritzgussteil ausgebildet. So ist es möglich, die Gurtführung und/oder den Abstandshalter massiv und dennoch elastisch auszubilden. Damit wird das Verletzungerisiko im Falle eines Unfalls deutlich gesenkt. Für eine stabile Halterung der Liege ist vorgesehen, dass die Gurtführung den Holm formschlüssig umgreift.

In einer Ausführung ist vorgesehen, dass die Holme die Matratze gegen verrutschen sichern, indem die Holme schräge Flächen aufweisen, die vorzugsweise gegeneinander geneigt sind und an schrägen Flächen der Matratze anliegen. Die schrägen Flächen der Matratze und der Holme stützen sich gegeneinander ab und sichern so die Matratze gegen Verrutschen.

Eine Verwendung der Liege kann in einem Fahrerhaus als einzelne Liege, die platzsparend verstaubar ist, erfolgen. Es ist auch möglich, die Liege in einem Fahrerhaus zu verwenden, das mehr als eine Liege aufweist, wobei die erfindungsgemäße Liege dann vorteilhafterweise als obere Liege einer übereinander angeordneten Doppelliege ausgebildet ist. Es ist auch möglich, die Liege in einem Fahrerhaus eines Camping- oder Freizeitfahrzeug zu verwenden.

In den Figuren sind weitere Ausführungsbeispiele der Erfindung dargestellt und erläutert.

Dabei zeigen:
- Fig. 1: Ein Querschnitt eines Fahrerhaus mit Liegenanordnung,
- Fig. 2: Eine freigeschnittenen Liege in Gebrauchsstellung,
- Fig. 3: Den Gurtverlauf im Bereich einer Gurtaufhängung,
- Fig. 4: Eine Gurtführung.

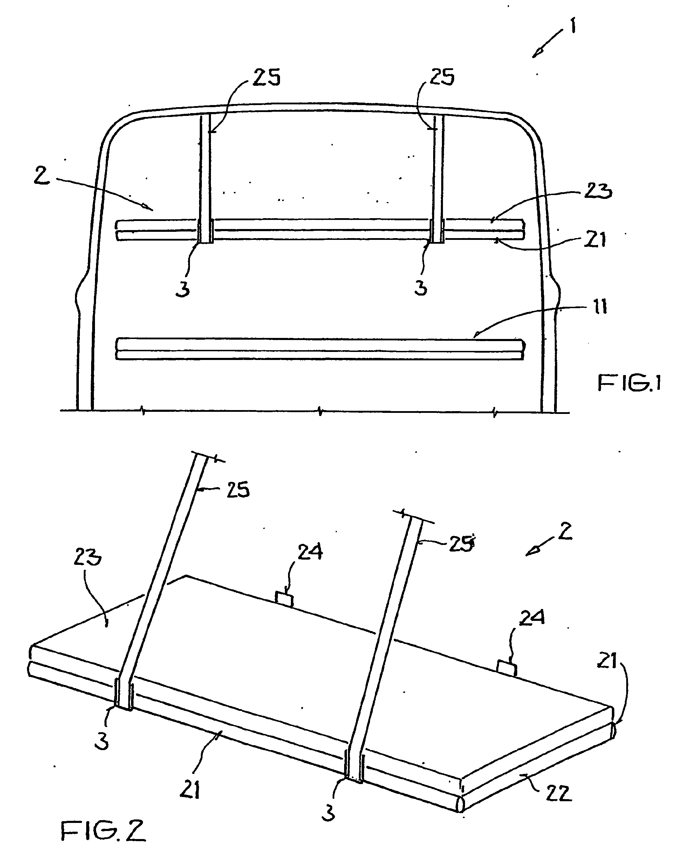

In der Figur 1 ist ein Querschnitt eines Fahrerhauses 1 eines Nutzfahrzeugs dargestellt. Das Fahrerhaus 1 weist in seinem hinteren Bereich zwei übereinander angeordnete Liegen 2, 11 auf. Die untere Liege 11 ist eine herkömmlich ausgebildete Liege, die auf einer Auflage, z. B. ein Schranksystem aufliegend ausgebildet ist. Die obere Liege 2 ist eine schwenkbar an der Rückwand des Fahrerhauses 1 gelagerte Liege 2, die bei Nichtgebrauch nach oben oder unten weggeschwenkt werden kann.

Der Aufbau der Liege 2 ist in Figur 2 näher dargestellt. Die Liege 2 weist zwei längs'der Liegefläche parallel verlaufende Holme 21 auf, die über Querstreben 21 miteinander verbunden sind. Die Holme 21 und die diese verbindenden Querstreben 22 bilden eine Auflagefläche für eine Matratze 23. Der hintere Holm 21 ist mit der Rückwand des Fahrerhauses über zwei Scharniere 24 verbunden und damit schwenkbar gelagert. Der vordere Holm 21 ist über zwei Gurte 25 an dem Dach des Fahrerhauses 1 aufgehängt. Der Verlauf der Gurte 25 im Bereich der Holme 21 ist in der Schnittdarstellung von Figur 3 gezeigt.

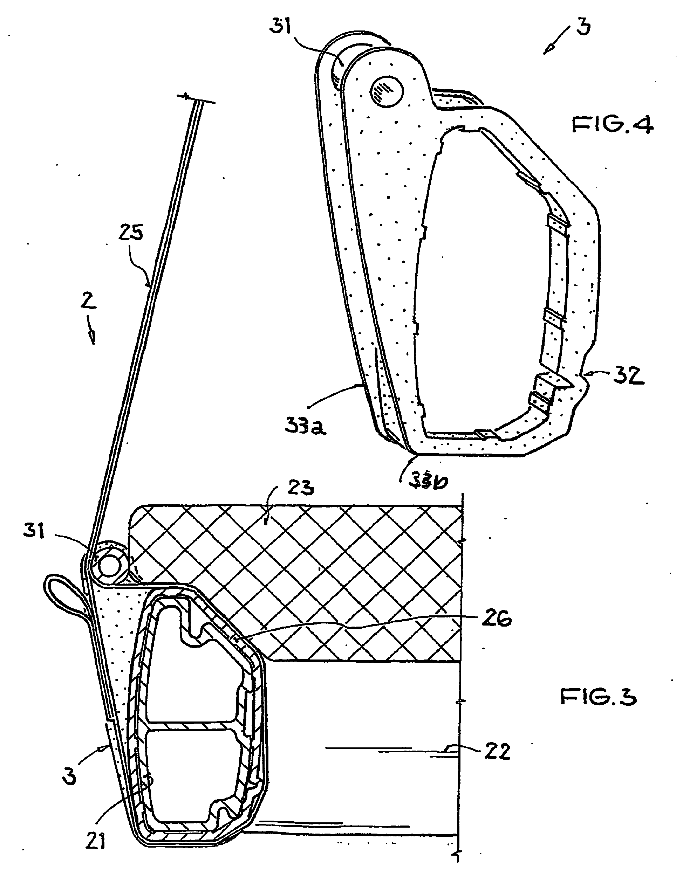

Der Holm 21 weist eine, in Figur 4 gezeigte, Gurtführung 3 auf, die den Gurt 25 an dem Holm 21 anliegend einmal um den Holm 21 herum führt. Dadurch wird eine besonders gute Anbindung und damit eine stabile Aufhängung der Liege 2 erzielt. Die Gurtführung 3 weist eine Vertiefung auf, in der der Gurt 25 formschlüssig geführt ist. Zu beiden Seiten ist die Vertiefung mit einem erhabenen Rand begrenzt, so dass die Gurtführung 3 den Gurt 25 gegen seitliches Verrutschen sichert.

Die Gurtführung 3 weist eine an das Profil des Holmes 21 angepasste Innenkontur auf und umfasst diesen passgenau und formschlüssig. Zur Montagevereinfachung weist die Gurtführung zwei Schenkel 33ä, 33b auf, die den Holm 21 umgreifen und mit einer Rastvorrichtung 32 fest miteinander verbindbar sind. Dadurch kann die Gurtführung nachträglich an dem Holmangebracht werden und oder justiert werden.

An der Gurtführung 3 ist ein Abstandshalter 31 angeformt, der den Gurt 25 mit Abstand an der Matratze 23 vorbei führt. So wird gewährleistet, dass die Matratze 23 von dem Gurt 25 nicht zusammengedrückt wird, was die Liegefläche einengen würde. Die Matratze 23 kann so über die gesamte Breite der Liegefläche verlaufen und die Holme 21 ganz überdecken. Dadurch werden die Holme 21 durch die Matratze 23 abgepolstert und zudem eine maximale Ausnützung der zur Verfügung stehenden Breite der Liege 2 als Liegefläche ermöglicht.

Die seitlich an der Matratze 23 vorbeigeführten Gurte 25 sind flexibel und elastisch ausgebildet und weisen damit ein geringes Verletzungspotenzial auf. Die Gurte 25 schützen eine auf der Liege 2 liegende Person davor, nach vorne von der Liege 2 herunterzustürzen. Insbesondere wenn die Liege 2 während des Fahrbetriebs benutzt wird, schützen die Gurte 25 den Liegenden z. B. bei scharfen Bremsmanövern davor, aus der Liege 2 herauszufallen. Aufgrund ihrer Elastizität fangen die Gurte 25 den Liegenden auch bei scharfen Bremsmanövern relativ weich ab.

Die Gurtführung 3 und der Abstandshalter 31 weist eine abgerundete Kontur auf. Zudem ist die Gurtführung 3 ist aus einem Kunststoff ausgebildet. Sie ist damit fest genug, um den Gurt sicher mit der Liege 2 bzw: dem Holm 21 zu verbinden und zugleich elastisch, so dass im Falle eines Unfalls möglichst wenig Verletzungsgefahr von der Gurtführung 3 und/oder dem Abstandshalter 31 ausgeht.

Die Holme 21 weisen einander zugewandte, gegensätzlich geneigte schräge Flächen 26 auf. Die Unterseite der Matratze 23 ist an das Profil der Holme 21 angepasst. Die Matratze 23 weist ebenfalls schräge Flächen auf, die in Anlage mit den schrägen Flächen 26 der Holme sind. Dadurch wird die Matratze 23 zwischen den Holmen 21 gehalten und gegen Verrutschen gesichert.

Die Holme 21 sind aus einem Kunststoff oder Aluminiumprofil ausgebildet. Insbesondere können die Holme 21 durch Ablängen eines langen Profilstücks auf die erforderliche Länge angepasst werden. Damit ist die Liege 2 einfach un kostengünstig herstellbar.

## Patentansprüche

1. Fahrerhaus für ein Nutzfahrzeug,
mit einer Liege (2), die an ihrer einer Seite an einer Wand des Fahrerhauses schwenkbar gelagert ist und an ihrer anderen Seite über einen Gurt (25) am Fahrerhausdach aufgehängt ist, wobei
die Liege (2) eine auf zwei parallel verlaufenden Holmen (21) aufliegende Matratze (23) aufweist, wobei ein Holm (21) über Scharniere (24) mit der Wand schwenkbar verbunden ist **dadurch gekennzeichnet, dass** der andere Holm (21) eine Gurtführung (3) aufweist, die den Gurt (25) an dem Holm. (21) anliegend einmal um den Holm (21) herum führt, und wobei ein Abstandshalter (31) den Gurt (25) mit Abstand an der Matratze (23) vorbei führt.

2. Fahrerhaus nach Anspruch 1,
**dadurch gekennzeichnet,**
**dass** der Abstandshalter (31) mit der Gurtführung (3) verbunden, vorzugsweise einstückig mit der Gurtführung (3) ausgebildet ist.

3. Fahrerhaus nach Anspruch 1 oder 2,
**dadurch gekennzeichnet,**
**dass** die Gurtführung (3) aus Kunststoff ausgebildet ist und vorzugsweise den Holm (21) formschlüssig umgreift.

4. Fahrerhaus nach einem der Ansprüche 1 bis 3,
**dadurch gekennzeichnet,**
**dass** die Gurtführung (3) den Gurt (25) gegen seitliches Verrutschen sichert.

5. Fahrerhaus nach einem der Ansprüche 1 bis 4,
**dadurch gekennzeichnet,**
**dass** die Matratze (23) die Holme (21) abpolstert, vorzugsweise sich bis über den Rand der Holme (21) hinweg erstreckt.

6. Fahrerhaus nach Anspruch 5,
**dadurch gekennzeichnet,**
**dass** die Holme (21) die Matratze (23) gegen Verrutschen sichern, indem die Holme (21) schräge Flächen aufweisen, die mit schrägen Flächen der Matratze (23) zusammenwirken.

## Claims

1. Driver's cab for a commercial vehicle, comprising a bunk (2) which is mounted pivotably on its one side on a wall of the driver's cab and on its other is suspended from the driver's cab roof via a strap (25), the bunk (2) having a mattress (23) resting on two bars (21) running in parallel, one bar (21) being connected pivotably to the wall via hinges (24), **characterized in that** the other bar (21) has a strap guide (3), which guides the strap (25) once around the bar (21), in a manner bearing against the bar (21), and a spacer (31) guiding the strap (25) past the mattress (23) at a distance.

2. Driver's cab according to Claim 1, **characterized in that** the spacer (31) is connected to the strap guide (3), and is preferably formed integrally with the strap guide (3).

3. Driver's cab according to Claim 1 or 2, **characterized in that** the strap guide (3) is formed from plastic and preferably fits around the bar (21) in a form-fitting manner.

4. Driver's cab according to one of Claims 1 to 3, **characterized in that** the strap guide (3) secures the strap (25) against slipping laterally.

5. Driver's cab according to one of Claims 1 to 4, **characterized in that** the mattress (23) cushions the bars (21), and preferably extends beyond the edge of the bars (21).

6. Driver's cab according to Claim 5, **characterized in that** the bars (21) secure the mattress (23) against slipping by the bars (21) having oblique surfaces which interact with oblique surfaces of the mattress (23).

## Revendications

1. Cabine de conducteur pour un véhicule utilitaire, comprenant une couchette (2) qui est montée de manière pivotante au niveau de l'un de ses côtés contre une paroi de la cabine de conducteur et qui est accrochée au niveau de son autre côté par le biais d'une courroie (25) au toit de la cabine de conducteur,
la couchette (2) présentant un matelas (23) posé sur deux longerons (21) s'étendant parallèlement, un longeron (21) étant connecté de manière pivotante à la paroi par le biais de charnières (24), **caractérisée en ce que** l'autre longeron (21) présente une glissière de courroie (3) qui guide la courroie (25) en applique contre le longeron (21) une fois autour du longeron (21), un élément d'espacement (31) guidant la courroie (25) devant le matelas (23) à distance de celui-ci.

2. Cabine de conducteur selon la revendication 1,
**caractérisée en ce que**
l'élément d'espacement (31) est connecté à la glissière de courroie (3), de préférence est réalisé d'une seule pièce avec la glissière de courroie (3).

3. Cabine de conducteur selon la revendication 1 ou 2,
**caractérisée en ce que**
la glissière de courroie (3) est réalisée en plastique et vient en prise de préférence par engagement positif autour du longeron (21).

4. Cabine de conducteur selon l'une quelconque des revendications 1 à 3,
**caractérisée en ce que**
la glissière de courroie (3) fixe la corroie (25) contre un glissement latéral.

5. Cabine de conducteur selon l'une quelconque des revendications 1 à 4,
**caractérisée en ce que**
le matelas (23) sert de rembourrage aux longerons (21), de préférence s'étend jusqu'au-delà du bord des longerons (21).

6. Cabine de conducteur selon la revendication 5,
**caractérisée en ce que**
les longerons (21) protègent le matelas (23) contre le glissement, **en ce que** les longerons (21) présentent des faces obliques qui coopèrent avec des faces obliques du matelas (23).
